# EUROPEAN PATENT APPLICATION

(11) **EP 0 906 848 A1**
(43) Date of publication of application: **07.04.1999**
(21) Application number: 98203326.8
(22) Date of filing: 01.10.1998
(51) Int. Cl.: B60P 3/08

(54) **Double-decked car transport carrier**

(30) Priority: 01.10.1997 NL 1007191
(71) Applicant: Groenewold's Carrosseriefabriek B.V., 9601 LJ Hoogezand (NL)
(72) Inventor: Groenewold, Reinder, 9606 PZ Kropswolde (NL)
(74) Representative: Smulders, Theodorus A.H.J., Ir.

(57) **Abstract**

A double-decked car transport carrier having a bottom deck (4) and a top deck (5) which is displaceable between an upper loading position and a lower transporting position and which comprises a framework (9), at least one tilting-deck part (10, 11) which is at least partially tiltable upwards and at least one bridging-deck part (12). The tilting-deck part (10, 11) in lowered condition forms with the bridging-deck part (12) continuous travel tracks in longitudinal direction of the top deck (5). The tilting-deck part (10, 11) and the bridging-deck part (12) are supported by the framework (9). As the bridging-deck part (12) is displaceable in longitudinal direction of the top deck (5) independently of the tilting-deck part (10, 11), the loadability of the transport carrier is improved with respect to capacity, and also in many cases with respect to weight distribution of the load.

## Description

The invention relates to a double-decked car transport carrier according to the preamble of claim 1.

Basically, two categories of car transport carriers can be distinguished. In the solutions of the first category, the top deck comprises tiltable bridge parts which can be lowered tiltingly into the residual spaces between the cars on the bottom deck. These tiltable bridge parts also enable an overlapping loading of cars on the top deck.

The invention relates to the other category of solutions, wherein the top deck has a framework which is lowered after loading, wherein bridge parts have been tilted upwards beforehand to prevent contact with cars on the bottom deck and to enable an overlapping loading of the top deck. In particular for the transport of high cars, such as so-called space wagons and cross-country cars, car transport carriers of the latter category of solutions in many cases prove to provide a greater transport capacity and a better load distribution.

However, there is a need for a further increase of the conveying capacity of the car transport carriers and for a further improvement of the weight distributions involved.

The object of the invention is to provide a car transport carrier which, at least for particular loads, offers a further increased conveying capacity and/or weight distribution.

According to the present invention, this object is realized in that in a car transport carrier of the second category discussed, the bridging-deck part is displaceable in longitudinal direction of the top deck independently of the tilting-deck part.

This renders it possible to cause parts of cars on the bottom deck to project through the lowered framework at more locations, which improves in particular the transport capacity of cars having a relatively long and high roof. Depending on the sizes and models of the cars to be transported, up to two additional cars can for instance be taken along on a truck or trailer. In many cases, a better distribution of the weight of the load over the decks may or may not moreover be obtained.

The invention can in particular be suitably applied to transport carriers in the form of trucks and trailers for road transport, or at least superstructures therefor, where the optimal utilization of the maximum length and height sizes is of particular importance, but can also be used for other transport carriers such as railway wagons or inner works of containers.

Hereinafter, further objects, embodiments, effects and advantages of the invention will be described and specified on the basis of a presently most preferred exemplary embodiment, with reference to the accompanying drawings. In these drawings:
Fig. 1 is a side elevation, partly in transparent view, of an example of a truck combination according to the invention in unloaded condition,
Fig. 2 is a side elevation, partly in transparent view, of the truck combination according to Fig. 1 with a first loading of the truck, and
Fig. 3 is a side elevation, partly in transparent view, of the truck combination according to Fig. 2 with a second loading of the truck.

The double-decked car transport carrier shown in the Figures is formed by a truck combination with a truck 1 and a trailer 2. Although the proposed concept can also be advantageously applied to the trailer, only the truck is designed in accordance with the proposed concept, by way of example. Hence, only the truck will be further described hereinbelow.

The truck 1 has a cabin 3 and, behind it, a bottom deck 4. Extending above the bottom deck 4 and the cabin is a top deck 5. Via a supporting structure, the top deck 5 rests on the chassis 6. The supporting structure is designed with adjustable supporting legs 7, 8 for displacing the top deck 5 between an upper loading position and a lower transporting position. In the upper loading position (not shown), the top deck 5 is at the level of the upper ends of the foremost legs 7. Lower transporting positions are shown in the drawings. The precise height of the lower transporting positions are chosen depending on the form and height of the cars loaded on the bottom deck and the top deck. Further, as is known per se, the top deck can be lowered at the rear to a position in which the rear end connects to the road surface or to a deck of a trailer coupled behind the truck. During loading and unloading, the cars can then, via or not via the trailer, be driven from the road surface onto the truck or from the truck onto the road surface.

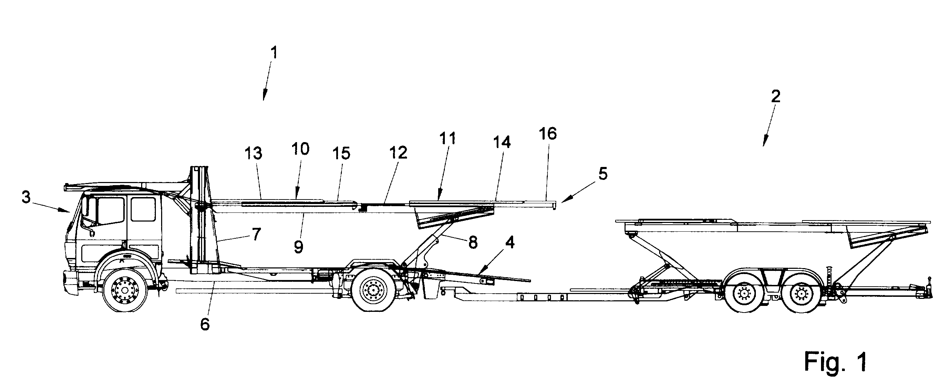

The top deck 5 is formed by a framework 9 supported by the supporting legs 7, 8, two upwardly tiltable tilting-deck parts 10, 11 supported by the framework 9, and a bridging-deck part 12 which is likewise supported by the framework 9. When the tilting-deck parts 10, 11 are in lowered condition (Fig. 1) and the bridging-deck part 12 is in a loading and unloading position, continuous travel tracks extend in longitudinal direction of the top deck 5 over the tilting-deck parts 10, 11 and the bridging-deck part 12. When a car is being loaded and unloaded respectively into and from the foremost position on the top deck 5, the wheels of the relevant car roll through these tracks. By tilting the two tilting-deck parts 10, 11, the two following cars can each be moved with a part of their body to a position above a preceding car. This in each case creates a free space under the upwardly tilted portion of the tilting-deck part 10, 11, into which free space parts of cars on the bottom deck 4 can project during the lowering of the top deck 5.

The bridging-deck part 12 is displaceable in longitudinal direction of the top deck 5, independently of the tilting-deck parts 10, 11. This is illustrated in Figs. 1, 2 and 3 by the different positions adopted by the bridging-deck part 12. During loading and unloading of the top deck 5, the bridging-deck part 12 is in the position shown in Fig. 1, behind the foremost tilting-deck part 10. After the top deck 5 has been loaded with cars and before or after the loading of the bottom deck 4, the bridging-deck part 12 is displaced in accordance with the shape and location of the cars on the bottom deck 4 to a location where it does not or at least as little as possible obstruct the extent to which the top deck 5 can be lowered. If necessary, the bridging-deck part 12 can be displaced under a car resting on the tiltable deck part 10 or 11.

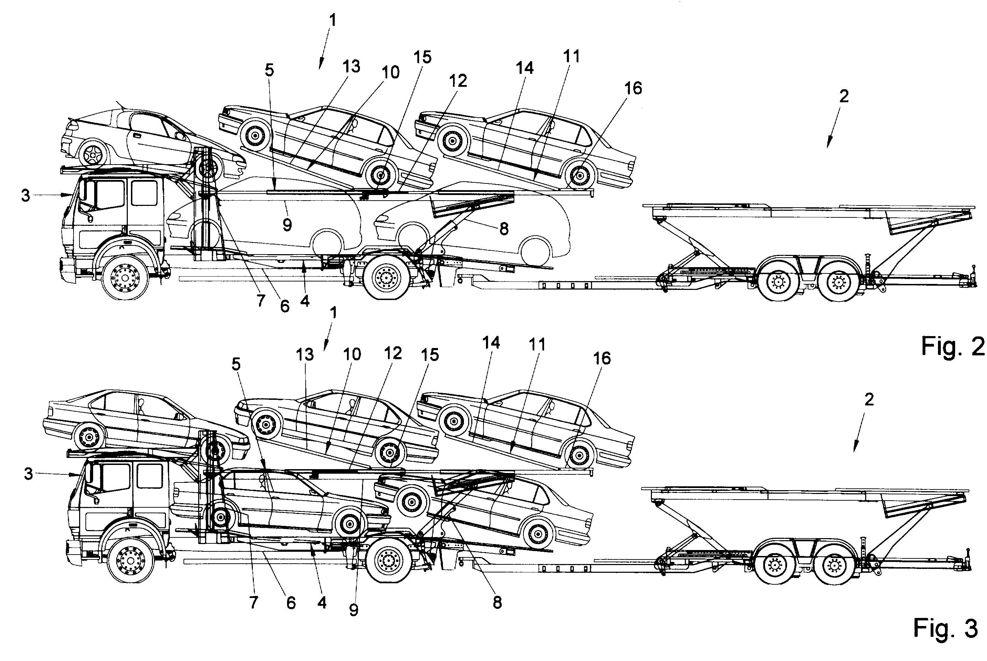

Fig. 2 shows a loading with space wagons on the bottom deck 4 which would not be possible if the bridging-deck part 12 were fixedly mounted in a conventional manner in the position shown in Fig. 1.

The displaceability of the bridging-deck part 12 could be realized in different manners. Taking into account the available space within which the displacement must be capable of being performed and the importance of providing a greatest possible adaptability of the top deck 5 to cars to be loaded thereon and therebelow, a bridging-deck part 12 which is slidable in longitudinal direction of the top deck 5 is most preferred.

For an optimum adaptation of the top deck 5 to the residual spaces between the cars on the bottom deck 4, it is further advantageous that the bridging-deck part 12 is displaceable into positions in which it overlaps the tilting-deck part 10 in longitudinal direction, as shown in Figs. 1 and 2. For some loadings, it is advantageous if the bridging-deck part 12 is also slidable into a position in which it overlaps the rearmost tilting-deck part 11.

The tilting-deck parts 10, 11 shown are each composed of an upwardly tiltable portion 13, 14 and a supporting portion 15, 16 which is pivotally coupled to the upwardly tiltable portion 13, 14 and on which the wheels of an axle of a car rest when the wheels of the other axle of that car rest on the upwardly tilted portion 13, 14 of the relevant tilting-deck part 10, 11. The bridging-deck part 12 is displaceable into a position in which it overlaps the supporting portion 15 of the foremost tilting-deck part 10 in longitudinal direction. In this position, the bridging-deck part 12 in most cases obstructs the lowering of the top deck 5 very little, if at all, because it is lowerable into the same residual space between cars on the bottom deck 4 as the supporting portion 15 of the foremost tilting-deck part 10. A similar advantage can also be achieved if the bridging-deck part 12 is slidable into a position in which it overlaps the supporting portion 16 of the rearmost tilting-deck part 11. However, this requires a displacement of the bridging-deck part 12 over a longer distance.

If the bridging-deck part 12 overlaps the foremost tilting-deck part 10, it is located under that tilting-deck part 10. This enables displacement of the intermediate deck part along the tilting-deck part 10 or 11, even if a car sits on the relevant tilting-deck part 10, 11. This is of particular importance to the foremost tilting-deck part 10, because cars must be capable of travelling across the bridging-deck part 12 to the foremost tilting-deck part 10 before the bridging-deck part 12 is moved into a position in which it overlaps the tilting-deck part 10.

It is further advantageous that the bridging-deck part 12 is displaceable to a position beyond the supporting portion 15 of the foremost tilting-deck part 10, because in some loading conditions, as in the example shown in Fig. 2, a portion of the bodywork of a car on the bottom deck 4 is located under the supporting portion 15, which forms a limitation to the distance through which the top deck 5 can be lowered. As the bridging-deck part 12 has been displaced beyond the supporting portion 15 of the foremost tilting-deck part 10, in the loading condition shown in Fig. 2 it is not located between the supporting portion 15 and the subjacent bodywork portion bounding the maximum downward displacement of the top deck 5.

## Claims

1. A double-decked car transport carrier having a bottom deck (4) and a top deck (5) above the bottom deck (4) supported by a supporting structure (7, 8), the supporting structure (7, 8) being arranged for displacing the top deck (5) between an upper loading position and a lower transporting position, the top deck (5) comprising a framework (9) supported by the supports, at least one tilting-deck part (10, 11) which is at least partially tiltable upwards, and at least one bridging-deck part (12), the tilting-deck part (10, 11) in lowered condition forming with the bridging-deck part (12) continuous travel tracks in longitudinal direction of the top deck (5), and the at least one tilting-deck part (10, 11) and the at least one bridging-deck part (12) being supported by the framework (9), **characterized in that** the bridging-deck part (12) is displaceable in longitudinal direction of the top deck (5) independently of the tilting-deck part (10, 11).

2. A car transport carrier according to claim 1, wherein said bridging-deck part (12) is slidable in longitudinal direction of the top deck (5).

3. A car transport carrier according to claim 1 or 2, wherein said bridging-deck part (12) is displaceable into a position overlapping the at least one tilting-deck part (10, 11) in longitudinal direction.

4. A car transport carrier according to claim 3, wherein the at least one tilting-deck part (10, 11) comprises an upwardly tiltable portion (13, 14) and a supporting portion (15, 16) which is pivotally coupled to said upwardly tiltable portion, and wherein said bridging-deck part (12) is displaceable into a position overlapping the at least one supporting portion (15, 16) of the at least one tilting-deck part (10, 11) in longitudinal direction.

5. A car transport carrier according to claim 3 or 4, wherein said bridging-deck part (12) in a condition overlapping the at least one tilting-deck part (10, 11), is located, at least in the area of the overlap, below the at least one tilting-deck part (10, 11).

6. A car transport carrier according to any one of the preceding claims, wherein the top deck (5) comprises at least two of said at least partially upwardly tiltable tilting-deck parts (10, 11).
